# FASCICULE DE BREVET EUROPEEN

(11) **EP 3 883 815 B1**
(45) Date de publication et mention de la délivrance du brevet: **04.10.2023**
(21) Numéro de dépôt: 19806105.3
(22) Date de dépôt: 07.11.2019
(51) Int. Cl.: B60Q 1/00, B60Q 1/04, B60Q 1/18, F21S 41/13, F21S 41/20, F21S 45/10, G01S 7/481, G01S 17/93, F21S 41/50, F21S 41/00

(54) **PARTIE DE VÉHICULE COMPRENANT UN DISPOSITIF LUMINEUX ET UNE PIÈCE OPAQUE À LA LUMIÈRE VISIBLE**
FAHRZEUGTEIL MIT EINER LEUCHTVORRICHTUNG UND EINEM FÜR SICHTBARES LICHT OPAKEN TEIL
VEHICLE PORTION COMPRISING A LUMINOUS DEVICE AND A PART THAT IS OPAQUE TO VISIBLE LIGHT

(30) Priorité: 20.11.2018 FR 1871618
(43) Date de publication de la demande: 29.09.2021
(73) Titulaire: VALEO VISION, 93012 Bobigny Cedex (FR)
(72) Inventeur: JIN, Hui, 93012 Bobigny Cedex (FR); DANIEL, Thomas, 93012 Bobigny Cedex (FR); PLANCHE, Gregory, 93012 Bobigny Cedex (FR); MOISY, Eric, 85774 Unterfoehring (DE); NAMYSLO, Stefan, 85774 Unterfoehring (DE)
(74) Mandataire: Valeo Visibility
(86) Numéro de dépôt international: PCT/EP2019/080586
(87) Numéro de publication internationale: WO 2020/104208

(56) Documents cités:
- EP-A1- 3 222 904
- EP-A2- 3 474 040
- US-A1- 2018 045 826
- US-A1- 2018 231 206
- US-A1- 2019 283 658
- US-B1- 7 125 134

## Description

La présente invention se rapporte au domaine d'éclairage de véhicule automobile. Particulièrement, l'invention a trait à une partie de véhicule comprenant un dispositif lumineux.

Dans le cadre de l'amélioration de la sécurité des véhicules avec conducteur et du développement des véhicules autonomes, la détection de l'environnement, de la présence des objets ou des personnes autour du véhicule est de plus en plus recherché. Pour cette raison, il y a une utilisation croissante des capteurs de détection de présence dans des véhicules.

De manière générale, ces capteurs sont aptes à transmettre et à recevoir les signaux constitués d'ondes électromagnétiques dans le domaine invisible. Le capteur LiDAR en est un bon exemple : il émet des rayons électromagnétiques dans le spectre infrarouge ou ultraviolet et il reçoit un signal de retour pour en déduire la distance jusqu'à un objet. Dans un autre exemple, on utilise les radars émettant et recevant des ondes radio à une fréquence autour de 24 GHz ou de 79 GHz pour la détection des objets présents autour du véhicule. Des exemples de dispositif lumineux comprenant une pièce opaque à la lumière visible sont décrits dans les documents US 7125134 B, EP 3222904 A, US 2018/231206 A et US 2018/045826 A.

Selon certains modèles existants, pour une acquisition efficace de l'environnement autour du véhicule, les capteurs sont placés aux quatre coins du véhicule automobile. Par ailleurs, pour une installation pratique de ces capteurs, ceux-ci sont placés à l'intérieur des dispositifs lumineux qui sont positionnés dans les quatre coins du véhicule.

Dans cette configuration, les capteurs sont placés derrière la glace de fermeture du dispositif lumineux de manière à pouvoir émettre et recevoir les signaux à travers la glace de fermeture.

Toutefois, la glace de fermeture étant translucide ou transparente, les capteurs reçoivent non seulement les ondes qui leur sont destinés, c'est-à-dire les ondes dans le domaine invisible, mais aussi les ondes dans le domaine visible, c'est-à-dire de la lumière visible. Ces ondes dans le domaine visible peuvent perturber la détection des capteurs dans la mesure où ces capteurs vont également recevoir celles-ci. Ceci peut amener à une analyse moins précise de l'objet à détecter. Par exemple, le capteur ne discriminera pas certaines longueurs d'ondes de la lumière ambiante de celles provenant à l'origine des ondes qu'il avait émise.

Le problème technique que vise à résoudre l'invention est donc d'améliorer le résultat de détection des capteurs tout en gardant l'emplacement avantageux des capteurs pour une bonne acquisition des signaux.

A cet effet, un premier objet de l'invention est une partie de véhicule, telle que définie dans la revendication 1, comprenant un dispositif lumineux comprenant:
- un boîtier ;
- une glace de fermeture ;
- au moins un module lumineux placé dans le boîtier et émettant un faisceau lumineux en direction de la glace de fermeture;
- au moins un capteur fixé au boîtier et étant agencé de manière à émettre un premier signal et/ou à recevoir un deuxième signal de manière à détecter et/ou visualiser des objets présents dans le champ de vision du capteur, lesdits premier et deuxième signaux étant constitué d'ondes électromagnétiques dont la longueur d'onde est supérieure à 780 nm et/ou inférieure à 380 nm.

Selon l'invention, la partie de véhicule comprend une pièce occultante agencée de manière à bloquer au moins partiellement des ondes électromagnétiques de longueur d'onde comprise entre 380 nm et 780 nm, ladite pièce occultante étant distincte du dispositif lumineux. Par ailleurs, le capteur et ladite pièce occultante sont agencés de manière à ce que les premier et deuxième signaux traversent ladite pièce occultante, et à ce que le module lumineux soit décalé latéralement par rapport à ladite pièce opaque de manière à ce que le faisceau lumineux émis par le module lumineux passe à côté de ladite pièce occultante.

Ainsi, la pièce occultante est une barrière empêchant au moins une partie des rayons dans le domaine visible d'atteindre le capteur. En revanche, la pièce occultante laisse passer les signaux réservés au capteur. La qualité des signaux capturés est donc préservée, ce qui permet une bonne analyse de détection des objets présents dans le champ de vision du capteur.

De plus, la pièce occultante est positionnée de manière à ne pas gêner le bon fonctionnement dudit dispositif en étant décalée latéralement par rapport aux modules lumineux. Ici, le terme « latéralement » est défini selon une direction perpendiculaire au sens d'émission de la lumière par le dispositif lumineux.

Par ailleurs, le fait que la pièce occultante et le dispositif lumineux sont deux pièces distinctes permet un assemblage simple et flexible de ces pièces l'une à l'autre.

En outre, étant donné que le capteur est caché au moins en partie par la pièce occultante, le capteur est à peine visible, voire n'est pas du tout visible de l'extérieur. Cela permet de conserver la structure classique du dispositif lumineux avec une glace de fermeture uniforme, et donc une réalisation simple dudit dispositif.

Enfin, le capteur reste fixé au dispositif lumineux. Le capteur est donc placé au même endroit que le dispositif lumineux, ici dans un coin du véhicule. Le capteur est donc placé à un endroit facilitant la détection de l'environnement autour du véhicule.

La partie de véhicule selon l'invention est telle que le capteur est agencé à l'intérieur du boîtier de manière à ce que la glace de fermeture du dispositif lumineux soit en vis-à-vis du capteur et placée entre le capteur et la pièce occultante; ainsi, le boîtier protège le capteur contre un éventuel choc avec d'autres composants logés dans le compartiment du véhicule ;

La partie de véhicule selon l'invention peut optionnellement comprendre une ou plusieurs des caractéristiques suivantes :
- le capteur peut être fixé directement ou indirectement au boîtier ;
- selon l'alinéa précédent et selon une configuration dans laquelle le capteur est fixé indirectement au boîtier via un support, ledit support peut être également le support pour les modules lumineux ; en d'autres termes, le capteur partage le même support avec les modules lumineux ;
- la pièce occultante est réalisée en un matériau complètement opaque à des ondes électromagnétiques de longueur d'onde entre 380 nm et 780 nm, et transparent à des ondes électromagnétiques de longueur d'onde supérieure à 780 nm et/ou inférieure à 380 nm ; ainsi, la pièce occultante sert de filtre et sélectionne seulement des ondes électromagnétiques réfléchies ou reçues ayant les mêmes longueurs d'onde que celles émises par le capteur ; de cette manière, la qualité des signaux capturés ainsi que l'analyse des objets sont davantage améliorées ;
- selon l'alinéa précédent, la pièce occultante est une pièce pleine ; on entend par « pièce pleine » une pièce dépourvue d'ouvertures traversantes ; une telle pièce occultante est simple à réaliser ; de plus elle permet de masquer complètement le capteur tout en permettant aux ondes de la longueur d'onde détectée de passer ;
- la pièce occultante est montée de manière amovible sur le dispositif lumineux ; de cette manière, la pièce opaque peut être se détacher facilement du dispositif lumineux et arrangée avec le dispositif lumineux de manière à faciliter le stockage de ces pièces ;
- alternativement, la pièce occultante est une pièce de carrosserie ou de châssis de véhicule ; ainsi, on exploite de manière astucieuse la structure du véhicule pour en réaliser la pièce occultante ;
- la pièce occultante est un pare-chocs ; alternativement, la pièce opaque peut faire partie de l'aile du véhicule, du capot du coffre, ou du capot fermant le compartiment moteur ;
- la pièce occultante est une grille, notamment une grille avant du compartiment moteur ;
- la pièce occultante vient en affleurement avec la glace de fermeture ; cela permet d'assurer une homogénéité de surface sur la face avant de la partie de véhicule ; ici, le terme « avant » est défini par rapport au sens d'émission de la lumière hors du dispositif lumineux.

Un autre objet de l'invention est un véhicule automobile comprenant une partie de véhicule selon l'invention.

Sauf indication contraire, les termes « avant », « arrière », « inférieur », « supérieur », « haut », « bas », « transversal », « longitudinal », « horizontal », ainsi que leurs déclinaisons en genre ou en nombre, se réfèrent au sens d'émission de lumière hors de l'unité optique. Sauf indication contraire, les termes « amont » et « aval » se réfèrent au sens de propagation de la lumière au sein du dispositif lumineux.

D'autres caractéristiques et avantages de l'invention apparaîtront à la lecture de la description détaillée des exemples non limitatifs qui suivent, pour la compréhension de laquelle on se reportera aux dessins annexés, parmi lesquels :
[Fig. 1] illustre une vue en perspective avant d'un dispositif lumineux faisant partie d'une partie de véhicule selon un premier mode de réalisation de l'invention;
[Fig. 2] illustre une vue de coupe montrant une section horizontale d'une partie de véhicule selon un premier mode de réalisation de l'invention et comprenant le dispositif lumineux de la figure 1 ;
[Fig.3] illustre une vue en perspective avant d'un dispositif lumineux faisant partie d'une partie de véhicule selon un deuxième mode de réalisation, qui n'est pas selon l'invention;
[Fig. 4] illustre une vue de coupe montrant une section horizontale d'une partie de véhicule selon le deuxième mode de réalisation et comprenant le dispositif lumineux de la figure 2.

Les éléments structurellement et fonctionnellement identiques, présents dans plusieurs figures distinctes, sont affectés d'une seule et même référence numérique ou alphanumérique.

Dans la suite de la description, les éléments structurellement et/ou fonctionnellement identiques, présents dans plusieurs figures distinctes, sont affectées d'une seule et même référence numérique ou alphanumérique.

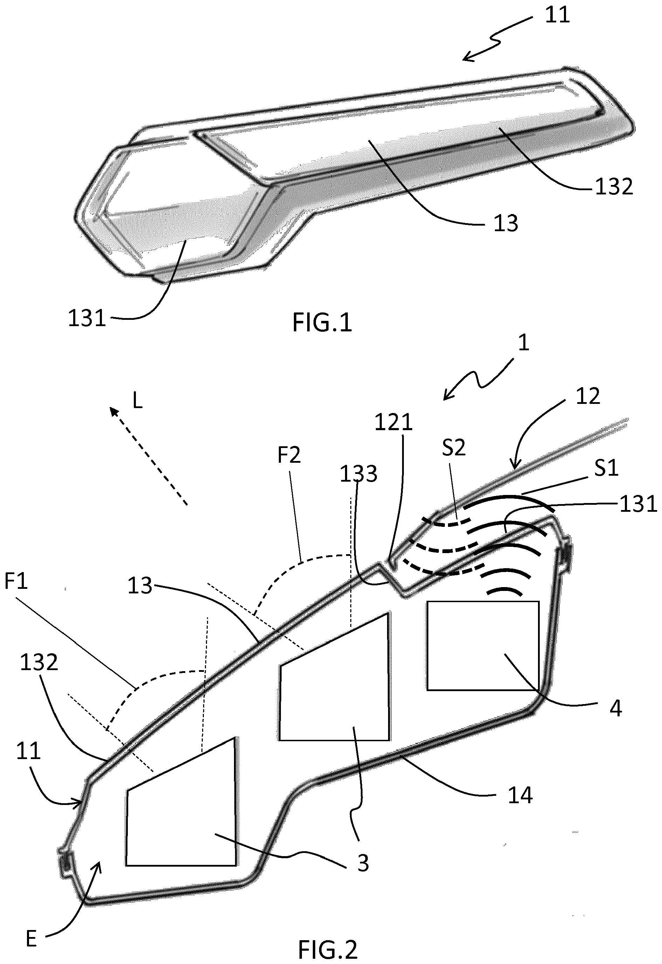

La figure 1 illustre une face avant d'un dispositif lumineux 11 appartenant à une partie de véhicule selon un premier mode de réalisation. Dans l'exemple illustré, le dispositif lumineux 1 est ici un dispositif d'éclairage, en particulier un projecteur, destiné à être installé à l'avant d'un véhicule automobile.

Le dispositif lumineux 11 comprend une glace de fermeture 13 couvrant entièrement la face avant dudit dispositif. Ici, la glace de fermeture 13 comprend une première portion 131 présentant une forme hexagonale et une deuxième portion 132 allongée.

Sur la figure 2, le dispositif lumineux 11 comprend un boîtier 14 fermé par la glace de fermeture 13 de manière à délimiter un espace interne E dans lequel sont logés des modules lumineux 3 et un module de capteurs 4.

Dans l'exemple illustré, les modules lumineux 3 sont disposés face à la deuxième portion 132 allongée de la glace de fermeture. Lesdits modules sont agencés de sorte à émettre des faisceaux lumineux F1, F2 vers la glace de fermeture 13 selon une direction longitudinale L.

Les modules lumineux 3 sont conçus pour émettre des faisceaux lumineux F1, F2 réalisant une fonction d'éclairage tels qu'un faisceau de croisement ou un faisceau de route.

Selon une variante non représentée, les faisceaux lumineux émis par les modules lumineux 3 réalisent une fonction de signalisation tels qu'un feu de position ou un feu diurne. Bien entendu, d'autres types de faisceaux lumineux peuvent être envisagés.

Quant au module de capteurs 4, celui-ci comprend au moins un capteur de détection de présence qui est agencé de manière à émettre des signaux dans le domaine invisible et de manière à recevoir non seulement des signaux dans le domaine invisible mais aussi des signaux lumineux. Dans le contexte de l'invention, on entend par les signaux dans le domaine invisible les ondes électromagnétiques dont la longueur d'onde n'est pas comprise dans le spectre visible, c'est-à-dire les longueurs d'onde inférieures à 380 nm ou supérieures à 780 nm.

A titre d'exemple, les capteurs de détection de présence utilisés peuvent être les capteurs LiDAR tels que les capteurs LiDAR de type « solid state LiDAR », ou de type « Flashing LiDAR», les radars, les caméras thermiques, les caméras infrarouge.

Dans l'exemple illustré, le module de capteurs 4 regroupe plusieurs capteurs de détection de présence en un seul bloc. Ces capteurs sont par exemple montés sur une seule carte à circuits imprimés.

Ici, le module de capteurs 4 est disposé en vis-à-vis de la première portion 131 en forme hexagonale de la glace de fermeture. Ledit module 4 émet des premiers signaux S1 et reçoit des deuxièmes signaux S2 à travers la glace de fermeture 13.

Selon l'invention et comme dans cet exemple, la partie de véhicule 1 comprend en outre une pièce occultante au moins partiellement opaque à la lumière visible.

Dans l'exemple illustré la pièce occultante 12 est une pièce pleine réalisée en un matériau complètement opaque à la lumière visible, ladite pièce étant ci-après appelée pièce opaque 12. La pièce opaque 12 bloque ainsi la lumière visible, c'est-à-dire des rayons de longueur d'onde comprise entre 380 nm et 780 nm, de sorte à empêcher tous les rayons lumineux visibles d'atteindre le module de capteurs 4.

En revanche, le matériau constitutif de la pièce opaque 12 est transparent aux ondes dans le domaine invisible, tels que les ondes infrarouges, les micro-ondes, etc. En d'autres termes, la pièce opaque 12 laisse passer les premiers signaux S1 et les deuxièmes signaux S2 de sorte qu'ils puissent se propager vers l'avant et atteindre un objet dans le champ de vision du capteur et de sorte que les signaux réfléchis par ledit objet, ici les deuxièmes signaux S2, puissent traverser la pièce opaque 12 et la glace de fermeture 13 et atteindre le module de capteurs 4. Par ailleurs, la pièce opaque 12 forme un filtre absorbant les rayons visibles, de sorte que les rayons reçus par le module de capteur sont essentiellement les deuxièmes signaux S2, les rayonnements provenant de l'environnement, tels que ceux de l'éclairage urbain ou des faisceaux d'éclairage et/ou de signalisation des autres véhicules, étant arrêtés.

Dans l'exemple illustré, la pièce opaque 12 est disposée face à la première portion 131 de la glace de fermeture 13. La pièce opaque 12 forme une paroi présentant presque la même épaisseur que la glace de fermeture 13.

Comme observé sur la figure 2, la pièce opaque 12 prolonge la deuxième portion 132 de façon à être décalée latéralement par rapport aux modules lumineux 3. La pièce opaque 12 ne se trouve pas en face des modules lumineux 3 pour ne pas occulter lesdits modules 3.

Ici, la première portion 131 est séparée de la deuxième portion 132 par une marche 133. Autrement dit, la première portion 131 est décalée longitudinalement vers l'arrière par rapport à la deuxième portion 132. Ainsi, ce décalage permet de créer un espace où est placée la pièce opaque 12 de sorte que ladite pièce opaque 12 ne soit pas trop en saillie par rapport à la deuxième portion 132, ce qui permet de réaliser simplement l'affleurement de la deuxième portion 132 et de ladite pièce opaque 12, donnant ainsi un aspect homogène, esthétique de la surface avant de la partie de véhicule 1.

Dans cet exemple, la pièce opaque 12 est une partie d'un pare-chocs avant de véhicule. Le dispositif lumineux 11 et la pièce opaque 12 sont agencés l'un par rapport à l'autre de manière à ce qu'une extrémité 121 de la pièce opaque 12 soit en butée contre la marche 133.

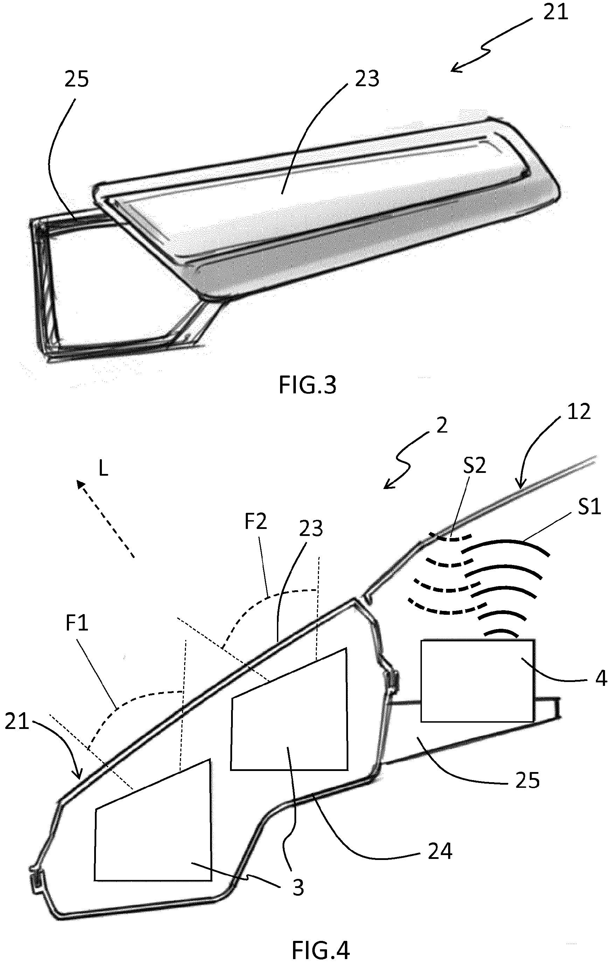

Les figures 3 et 4 illustrent un deuxième mode de réalisation d'une partie de véhicule 2, qui n'est pas selon l'invention.

Dans ce mode de réalisation, la partie de véhicule 2 comprend toujours un dispositif lumineux 21 et une pièce opaque 12.

D'un point de vue structurel, le dispositif lumineux 21 du deuxième mode de réalisation est légèrement différent du dispositif lumineux 11 du premier mode de réalisation. Précisément, le dispositif lumineux 21 est, ici, moins large que celui du premier mode de réalisation.

Cette différence est due au fait que le module de capteurs 4 est disposé à l'extérieur du dispositif lumineux 21. Ainsi, le dispositif lumineux 21 est dimensionné de manière à pouvoir contenir seulement les modules lumineux 3 identiques et agencés de façons similaires à ceux du premier mode de réalisation.

Le dispositif lumineux 21 comprend un module de capteurs 4 structurellement identique à celui du premier mode de réalisation. En revanche, comme décrit précédemment, le module de capteurs 4 est placé à l'extérieur du dispositif lumineux tout en étant fixé audit dispositif.

Précisément, le module de capteurs 4 est monté sur un bras de support 25. Ce dernier est fixé à un côté d'un boîtier 24 du dispositif lumineux 21. Dans l'exemple illustré, le bras de support 25 est constitué d'un cadre conçu de façon à recevoir une base du module de capteurs 4. Ladite base peut être une carte à circuits imprimés sur laquelle sont montés les capteurs.

La pièce opaque 12 du deuxième mode de réalisation est similaire à celle du premier mode de réalisation. Précisément, la pièce opaque 12 est, ici, une paroi placée devant et en vis-à-vis du module de capteurs 4 de manière à ce que les premiers signaux S1 et les deuxièmes signaux S2 traversent la pièce opaque 12 et de manière à ce que la lumière visible soit réfléchie ou absorbée par ladite pièce opaque 12.

Ici, la pièce opaque 12 prolonge une glace de fermeture 23 du dispositif lumineux 21.

Plus particulièrement, ladite pièce opaque 12 affleure la surface avant de la glace de fermeture 23.

De façon similaire au premier mode de réalisation, la pièce opaque 12 peut être une partie d'un pare-chocs avant de véhicule agencée de manière être opaque à la lumière visible. A titre d'exemple, cette partie du pare-chocs avant peut être réalisée en un matériau bloquant la lumière visible, mais laissant passer les longueurs d'onde inférieures à 380 nm et/ou supérieures à 780 nm. Alternativement, ladite partie peut être couverte d'un revêtement présentant la même propriété.

Selon le premier ou le deuxième mode de réalisation, la pièce opaque 12 peut être une pièce spécifiquement conçue pour le dispositif lumineux et pouvant se détacher dudit dispositif. Ainsi, le dispositif lumineux et la pièce opaque peuvent être emballés sous forme de kit à monter soi-même avec l'utilisation. Une fois assemblés, le dispositif lumineux et la pièce opaque forment une partie de véhicule agencée de manière à convenir au logement qui lui est dédié dans le véhicule.

Selon une variante non représentée, la pièce occultante 12 décrite dans les deux modes de réalisation précédents peut être remplacée par une pièce pleine translucide ou partiellement opaque à la lumière visible de manière à ce qu'elle laisse passer quand même une partie de la lumière visible.

Alternativement, la pièce occultante 12 peut être une grille, comprenant par exemple des fentes traversantes et des barres opaques à la lumière visible. Le capteur est ainsi difficilement visible tout en permettant le passage des premiers et des deuxièmes signaux.

Cette grille peut être réalisée dans le matériau ne laissant passer que les ondes d'une longueur d'onde inférieure à 380 nm et supérieure à 780 nm. De cette manière, les signaux de retour passent à travers les fentes comprennent à la fois les rayons visibles et les rayons invisibles alors que les signaux de retour traversent les barres opaques ne comprennent que les rayons invisibles. Ainsi, la pièce occultante est agencée de manière à ce que la proportion des rayons lumineux visibles par rapport aux rayons invisibles reste faible, voire insignifiante en vue de préserver la qualité des signaux capturés par les capteurs.

## Revendications

1. Partie (1 ; 2) de véhicule automobile comprenant un dispositif lumineux (11) comprenant :
- un boîtier (14) ;
- une glace de fermeture (13) ;
- au moins un module lumineux (3) placé dans le boîtier (14) et émettant un faisceau lumineux (F1, F2) en direction de la glace de fermeture (13);
- au moins un capteur (4) fixé au boîtier et étant agencé de manière à émettre un premier signal (S1) et/ou à recevoir un deuxième signal (S2) de manière à détecter et/ou visualiser des objets présents dans le champ de vision du capteur (4), lesdits premier et deuxième signaux (S1, S2) étant constitué d'ondes électromagnétiques dont la longueur d'onde est supérieure à 780 nm et/ou inférieure à 380 nm ;
comprenant une pièce occultante (12) agencée de manière à bloquer au moins partiellement des ondes électromagnétiques de longueur d'onde comprise entre 380 nm et 780 nm, ladite pièce occultante (12) étant distincte du dispositif lumineux et en ce que le capteur (4) et ladite pièce occultante(12) sont agencés de manière à ce que les premier et deuxième signaux (S1, S2) traversent ladite pièce occultante (12), et à ce que le module lumineux (3) soit décalé latéralement par rapport à ladite pièce occultante (12) de manière à ce que le faisceau lumineux (F1, F2) émis par le module lumineux (3) passe à côté de ladite pièce occultante (12), la partie de véhicule (1 ; 2) étant **caractérisée en ce que** le capteur (4) est agencé à l'intérieur du boîtier (14) de manière à ce que la glace de fermeture (13) du dispositif lumineux (11) soit en vis-à-vis du capteur (4) et placée entre le capteur (4) et la pièce occultante (12).

2. Partie de véhicule (1 ; 2) selon la revendication 1, **caractérisée en ce que** la pièce occultante (12) est réalisée en un matériau opaque à des ondes électromagnétiques de longueur d'onde entre 380 nm et 780 nm, et transparent à des ondes électromagnétiques de longueur d'onde supérieure à 780 nm et/ou inférieure à 380 nm.

3. Partie (1 ; 2) de véhicule selon l'une des revendications 1 à 2, **caractérisée en ce que** la pièce occultante (12) est montée de manière amovible sur le dispositif lumineux (11 ; 21).

4. Partie (1 ; 2) de véhicule selon l'une des revendications 1 à 2, **caractérisée en ce que** la pièce occultante (12) est une pièce de carrosserie ou de châssis de véhicule.

5. Partie (1 ; 2) de véhicule selon la revendication 4, **caractérisée en ce que** la pièce occultante est un pare-chocs.

6. Partie (1 ; 2) de véhicule selon la revendication 4, **caractérisée en ce que** la pièce occultante est une grille.

7. Partie (1 ; 2) de véhicule selon l'une des revendications 1 à 4, **caractérisée en ce que** la pièce occultante est une pièce pleine.

8. Partie de véhicule (1 ; 2) selon l'une des revendications précédentes, **caractérisée en ce que** la pièce occultante (12) vient en affleurement avec la glace de fermeture (13 ; 23).

9. Véhicule automobile **caractérisé en ce qu'**il comprend une partie de véhicule selon l'une des revendications précédentes.

## Patentansprüche

1. Kraftfahrzeugteil (1; 2), umfassend eine Leuchtvorrichtung (11), umfassend:
- ein Gehäuse (14);
- ein Abschlussglas (13);
- mindestens ein Leuchtmodul (3), das in dem Gehäuse (14) angeordnet ist und ein Lichtbündel (F1, F2) in Richtung des Abschlussglases (13) aussendet;
- mindestens einen Sensor (4), der an dem Gehäuse befestigt ist und so ausgebildet ist, dass er ein erstes Signal (S1) aussendet und/oder ein zweites Signal (S2) empfängt, so dass im Sichtfeld des Sensors (4) vorhandene Objekte erkannt und/oder visualisiert werden, wobei die ersten und zweiten Signale (S1, S2) aus elektromagnetischen Wellen bestehen, deren Wellenlänge mehr als 780 nm und/oder weniger als 380 nm beträgt; umfassend ein verdeckendes Bauteil (12), das so ausgebildet ist, dass es elektromagnetische Wellen mit einer Wellenlänge zwischen 380 nm und 780 nm mindestens teilweise blockiert, wobei das verdeckende Bauteil (12) von der Leuchtvorrichtung verschieden ist, und wobei der Sensor (4) und das verdeckende Bauteil (12) so ausgebildet sind, dass die ersten und zweiten Signale (S1, S2) das verdeckende Bauteil (12) durchdringen und dass das Leuchtmodul (3) in Bezug auf das verdeckende Bauteil (12) seitlich versetzt ist, so dass das Lichtbündel (F1, F2), das von dem Leuchtmodul (3) ausgesendet wird, neben dem verdeckenden Bauteil (12) verläuft, wobei der Fahrzeugteil (1; 2) **dadurch gekennzeichnet ist, dass** der Sensor (4) im Inneren des Gehäuses (14) so ausgebildet ist, dass das Abschlussglas (13) der Leuchtvorrichtung (11) dem Sensor (4) gegenüberliegt und zwischen dem Sensor (4) und dem verdeckenden Bauteil (12) angeordnet ist.

2. Fahrzeugteil (1; 2) nach Anspruch 1, **dadurch gekennzeichnet, dass** das verdeckende Bauteil (12) aus einem Material ausgeführt ist, das für elektromagnetische Wellen mit einer Wellenlänge zwischen 380 nm und 780 nm undurchlässig ist und für elektromagnetische Wellen mit einer Wellenlänge über 780 nm und/oder unter 380 nm durchlässig ist.

3. Fahrzeugteil (1; 2) nach einem der Ansprüche 1 bis 2, **dadurch gekennzeichnet, dass** das verdeckende Bauteil (12) an der Leuchtvorrichtung (11; 21) lösbar montiert ist.

4. Fahrzeugteil (1; 2) nach einem der Ansprüche 1 bis 2, **dadurch gekennzeichnet, dass** das verdeckende Bauteil (12) ein Karosserie- oder Rahmenteil eines Fahrzeugs ist.

5. Fahrzeugteil (1; 2) nach Anspruch 4, **dadurch gekennzeichnet, dass** das verdeckende Bauteil ein Stoßfänger ist.

6. Fahrzeugteil (1; 2) nach Anspruch 4, **dadurch gekennzeichnet, dass** das verdeckende Bauteil ein Gitter ist.

7. Fahrzeugteil (1; 2) nach einem der Ansprüche 1 bis 4, **dadurch gekennzeichnet, dass** das verdeckende Bauteil ein massives Teil ist.

8. Fahrzeugteil (1; 2) nach einem der vorhergehenden Ansprüche, **dadurch gekennzeichnet, dass** das verdeckende Bauteil (12) bündig mit dem Abschlussglas (13; 23) ist.

9. Kraftfahrzeug, **dadurch gekennzeichnet, dass** es einen Fahrzeugteil nach einem der vorhergehenden Ansprüche umfasst.

## Claims

1. Motor-vehicle component (1; 2) comprising a light-emitting device (11), comprising:
- a casing (14);
- a closing outer lens (13);
- at least one light-emitting module (3) that is placed in the casing (14) and that emits a light beam (F1, F2) in the direction of the closing outer lens (13);
- at least one sensor (4) that is fastened to the casing and that is arranged so as to send a first signal (S1) and/or to receive a second signal (S2) so as to detect and/or view objects present in the field of view of the sensor (4), said first and second signals (S1, S2) being formed from electromagnetic waves, the wavelength of which is longer than 780 nm and/or shorter than 380 nm;
comprising an occulting part (12) arranged so as to at least partially block electromagnetic waves having a wavelength comprised between 380 nm and 780 nm, said occulting part (12) being separate from the light-emitting device, the sensor (4) and said occulting part (12) being arranged so that the first and second signals (S1, S2) pass through said occulting part (12), and so that the light-emitting module (3) is offset laterally with respect to said occulting part (12) so that the light beam (F1, F2) emitted by the light-emitting module (3) passes to the side of said occulting part (12), the vehicle component (1; 2) being **characterized in that** the sensor (4) is arranged inside the casing (14) so that the closing outer lens (13) of the light-emitting device (11) faces the sensor (4) and is placed between the sensor (4) and the occulting part (12).

2. Vehicle component (1; 2) according to Claim 1, **characterized in that** the occulting part (12) is made of a material that is opaque to electromagnetic waves of wavelength between 380 nm and 780 nm and that is transparent to electromagnetic waves of wavelength longer than 780 nm and/or shorter than 380 nm.

3. Vehicle component (1; 2) according to one of Claims 1 to 2, **characterized in that** the occulting part (12) is removably mounted on the light-emitting device (11; 21).

4. Vehicle component (1; 2) according to one of Claims 1 to 2, **characterized in that** the occulting part (12) is a part of a body or of a chassis of the vehicle.

5. Vehicle component (1; 2) according to Claim 4, **characterized in that** the occulting part is a bumper.

6. Vehicle component (1; 2) according to Claim 4, **characterized in that** the occulting part is a grille.

7. Vehicle component (1; 2) according to one of Claims 1 to 4, **characterized in that** the occulting part is an unapertured part.

8. Vehicle component (1; 2) according to one of the preceding claims, **characterized in that** the occulting part (12) lies flush with the closing outer lens (13; 23) .

9. Motor vehicle, **characterized in that** it comprises a vehicle component according to one of the preceding claims.
